# EUROPÄISCHE PATENTANMELDUNG

(11) **EP 4 663 446 A1**
(43) Veröffentlichungstag der Anmeldung: **17.12.2025**
(21) Anmeldenummer: 25182345.6
(22) Anmeldetag: 12.06.2025
(51) Int. Cl.: B60K 1/04

(54) **BATTERIETRÄGER FÜR EIN ELEKTROFAHRZEUG**

(30) Priorität: 12.06.2024 CN 202410755574
(71) Anmelder: Benteler Automobiltechnik GmbH, 33102 Paderborn (DE)
(72) Erfinder: Zhao, Xu, Shanghai (CN); Ding, Dong, Shanghai, 20012 (CN); Schröter, Martin, 33449 Langenberg (DE); Lin, Qingli, Shanghai (CN); Tian, Xing, Shanghai (CN); Handing, Christian, 33102 Paderborn (DE)
(74) Vertreter: Osterhoff, Utz

(57) **Zusammenfassung**

Die Erfindung betrifft einen Batterieträger (1) für eine Elektrofahrzeug, aufweisend einen wannenförmigen Behälter, der mit einem Deckel verschließbar ist, wobei der wannenförmige Behälter (3) einen außen umlaufenden Rand aufweist, welcher in Einbaulage an einer Vorderseite und einer Rückseite eine Querwand (2) aufweist und seitlich jeweils ein Längsprofil (5) aufweist, wobei das jeweilige Längsprofil (5) im Querschnitt von einem doppelhutförmigen Mittelprofil (11), einer innenliegenden Rahmenwand (13) und einem außenliegenden U-förmigen Verstärkungsprofil (12) ausgebildet ist, wobei die drei Profile (11, 12, 13) durch Warmumformen und Presshörten hergestellt sind und miteinander thermisch gefügt sind und dass der Behälter einen Boden (4) aufweist, welcher fluiddicht mit den Querwänden (2) und den Längsprofilen (5) gekoppelt ist.

## Beschreibung

Die vorliegende Erfindung betrifft einen Batterieträger für ein Elektrofahrzeug gemäß den Merkmalen im Anspruch 1.

Aus dem Stand der Technik ist zum Antrieb von Kraftfahrzeugen der Einsatz von Elektroenergie in den letzten Jahren zunehmend und mehr bekannt geworden. Hierbei wird der Antrieb eines Elektrokraftfahrzeuges bzw. Elektrofahrzeuges durch einen Elektromotor vorgenommen. Die dazu benötigte Energie wird in einem Batteriespeicher, sogenannten Batterien bzw. Antriebsbatterien in dem Elektrofahrzeug mitgeführt.

Die Batterien selbst müssen zum einen in dem Elektrofahrzeug untergebracht werden, zum anderen temperiert werden, da sie sich beim Aufladevorgang jedoch auch bei einem beispielsweise schnellen Endladevorgang erhitzen. Hierzu sind Batterieträger bzw. Batteriekästen bekannt, welche auch als Battery Tray bezeichnet werden.

Beispielsweise ist aus der DE 10 2019 102 754 A1 ein solcher Batterieträger bekannt.

Im Falle eines Fahrzeugcrashes, insbesondere eines Seitencrashes, hat der Batterieträger ferner die Aufgabe, eine hinreichende Crashsicherheit zu gewährleisten, so dass die Batterien innerhalb des Batterieträgers sicher aufbewahrt werden, zum anderen enthaltene Batterieflüssigkeiten, aber auch Kühlflüssigkeiten zur Temperierung der Batterien nicht auslaufen oder an die Umwelt gelangen, geschweige denn sich selbst entzünden können.

Aufgabe der vorliegenden Erfindung ist daher, einen Batterieträger bereitzustellen, der ein geringes Eigengewicht, eine besonders hohe Crashsicherheit und optional eine entsprechend gute Temperierbarkeit sicherstellt.

Die zuvor genannte Aufgabe wird mit einem Batterieträger gemäß den Merkmalen im Anspruch 1 gelöst. Vorteilhafte Ausgestaltungsvarianten sind in den abhängigen Ansprüchen beschrieben.

Der Batterieträger für ein Elektrofahrzeug weist einen wannenförmigen Behälter auf. Dieser wannenförmige Behälter ist bevorzugt mit einem Deckel verschließbar. Der wannenförmige Behälter ist ein sogenannter gebauter Behälter, der aus Einzelkomponenten zusammengebaut wird.

Ein außen umlaufender Rand weist dabei in Einbaulage an dem Kraftfahrzeug in Kraftfahrzeuglängsrichtung an einer Vorderseite und einer Rückseite jeweils eine Querwand auf. An den, in Kraftfahrzeugquerrichtung außenliegenden Seiten ist jeweils ein Längsprofil angeordnet, wobei der umlaufende Rand des wannenförmigen Behälters durch dieses Längsprofil mit ausgebildet wird. Das Längsprofil selbst verläuft in Kraftfahrzeuglängsrichtung orientiert.

Das Längsprofil ist im Querschnitt aus drei Profilen, die separat voneinander hergestellt sind, hergestellt. Dies ist in einem Querschnitt ein doppelhutförmiges Mittelprofil. An der Innenseite ist jeweils eine innenliegende Rahmenwand ausgebildet, welche auch als Rahmenwandprofil bezeichnet werden kann. Auf die Kraftfahrzeugquerrichtung bezogen ist im Querschnitt das Längsprofil an der Außenseite durch ein außenliegendes, im Querschnitt U-förmiges Verstärkungsprofil ausgebildet. Das Mittelprofil ist im Querschnitt des Längsprofils mittig angeordnet. An der Innenseite des Batterieträgers ist eine innenliegende Rahmenwand angeordnet und mit dem Mittelprofil gekoppelt. Auf der jeweiligen Außenseite ist das U-förmige Verstärkungsprofil ausgebildet, wobei ein Tal- bzw. Grundbereich auf die Kraftfahrzeugquerrichtung jeweils nach außen gerichtet ist, so dass das U-förmige Verstärkungsprofil auf die Horizontalrichtung bezogen, liegend angeordnet ist. Die U-förmigen Stege sind von außen an das doppelhutförmige Mittelprofil gekoppelt.

Weiterhin sind erfindungsgemäß zumindest zwei dieser drei Profile, mithin Mittelprofil, Rahmenwand und Verstärkungsprofil, als Stahlbauteile hergestellt aus einer härtbaren Stahllegierung. Der Umformvorgang erfolgt durch Warmumformen und Presshärten, so dass alle drei Profile jeweils mindestens eine Zugfestigkeit Rm größer 1000 MPa aufweisen. Die drei Profile sind miteinander gekoppelt, was insbesondere durch thermisches Fügen, optional zumindest teilweise unter Eingliederung eines Dichtwerkstoffes, erfolgt. Im Querschnitt sind somit die Längsprofile als geschlossene Hohlprofile ausgebildet, bevorzugt mit mehreren Kammern.

Weiterhin weist der Behälter einen Boden auf. Der Boden erstreckt sich im Wesentlichen in die durch die Kraftfahrzeuglängsrichtung und in Kraftfahrzeugquerrichtung aufgespannte Ebene. Der Boden ist fluiddicht mit den Querwänden sowie mit den Längsprofilen gekoppelt. Die Querwände und die Längsprofile sind untereinander ebenfalls gekoppelt, so dass der außen umlaufende Rand hergestellt ist und die Wanne wiederum hergestellt ist, insbesondere durch eine fluiddichte Koppelung. Der umlaufende Rand kann dann mit einem Deckel verschlossen werden.

Der erfindungsgemäße Batterieträger zeichnet sich somit durch eine besonders hohe Steifigkeit und Crashsicherheit aus, insbesondere gegen Seitencrashs. Gleichzeitig weist der Batterieträger eine günstige Produzierbarkeit und ein geringes Eigengewicht auf.

Damit die in dem Batterieträger angeordneten Batterien entsprechend temperierbar sind, ist der Boden weiterhin als Kühlboden ausgebildet. Besonders bevorzugt ist der Boden selbst doppellagig ausgebildet. Eine Lage dieses Kühlbodens weist bevorzugt Verprägungen auf, so dass durch Anlage mit der zweiten Lage eine Kühlkanalstruktur ausgebildet ist. Durch Aneinanderschweißen und/oder -kleben und/oder -löten können somit die zwei Lagen einen entsprechenden Kühlboden ausbilden, welcher eine gute Temperierbarkeit aufweist. Hierzu sind insbesondere Verprägungen, bezogen von einem Innenraum des Batterieträgers ausgehend, auf die Kraftfahrzeugvertikalrichtung nach unten ausgebildet. Die verbleibende Fläche bietet somit eine im Wesentlichen plane bzw. ebene Aufstandsfläche für Batterien, so dass ein entsprechend guter thermischer Übergang bereitgestellt ist.

Ergänzend oder alternativ weist weiterhin der Batterieträger einen Unterfahrschutz auf. Bevorzugt kann der Unterfahrschutz als Unterfahrschutzblech ebenfalls durch Warmumformen und Presshärten mit einer Zugfestigkeit Rm von bevorzugt mehr als 1000 MPa hergestellt werden. Der Unterfahrschutz kann bevorzugt auch die untenliegende bzw. außenliegende Lage des doppellagigen Kühlbodens selbst ausbilden. Hierdurch wird die Crashsicherheit gesteigert, gleichzeitig das Eigengewicht jedoch geringgehalten.

Wie bereits eingangs beschrieben ist der erfindungsgemäße Batterieträger insbesondere als gebauter, mithin aus Einzelteilen zusammengesetzter Batterieträger hergestellt. Hierzu weisen insbesondere das Mittelprofil und die innenliegende Rahmenwand einen auf die Kraftfahrzeugvertikalrichtung bezogen unten angeordneten Flansch auf. Der Flansch weist in Einbausituation nach innen in Kraftfahrzeugquerrichtung. Zumindest abschnittsweise sind über diesen Flansch eine Doppellage bildend, die beiden Profile miteinander gekoppelt, insbesondere durch einen Punktschweißvorgang.

Weiterhin ist der zuvor beschriebene Flansch mindestens eines der Profile mit dem Boden gekoppelt. Dadurch, dass sich hier eine Dreifachlage bilden würde, welches hier insbesondere nur bedingt koppelbar ist durch thermisches Fügen beispielsweise durch ein Widerstandspunktschweißen, ist erfindungsgemäß vorgesehen, dass der Flansch der Rahmenwand in Längsrichtung einen wellenförmigen Verlauf aufweist. Die Wellenform kann dabei jeweils abgerundet ausgebildet sein. Die Wellenform kann jedoch auch rechteckig verlaufen. Weiterhin bevorzugt weist dann der Boden korrespondierend dazu einen wellenförmigen Randbereich an seinen auf die Kraftfahrzeugvertikalrichtung gegenüberliegenden Außenseiten auf. Die Wellenform des Flansches der Rahmenwand und die Wellenform des Randbereichs des Bodens greifen dann formschlüssig ineinander, insbesondere sägezahnprofilartig bzw. kammartig ineinander. Auf die Einbausituation untenliegend angeordnet, kommt dann der Flansch des Mittelprofils eine jeweilige Doppellage ausbildend zur Anlage. Mithin bilden der Flansch der Rahmenwand und der Randbereich des Bodens jeweils mit dem Flansch des Mittelprofils eine Doppellage. Es können dann mittels Widerstandspunktschweißens der Randbereich des Bodens mit dem Flansch des Mittelprofils sowie der Flansch der Rahmenwand mit dem Mittelprofil durch Widerstandspunktschweißen gekoppelt werden. Es sind nur Doppellagen ausgebildet. Hier kann zusätzlich ein Dichtstoff eingegliedert werden, so dass das wannenförmige Profil an diesem Bereich fluiddicht ausgebildet ist.

Im Sinne der Erfindung ist die zuvor beschriebene Anordnung auch invers vorstellbar, mithin würde der Flansch der Rahmenwand durchgehend ausgebildet sein, wohingegen der Flansch des Mittelprofils einen wellenförmigen Verlauf aufweist, welcher dann wiederum korrespondierend bzw. kämmend mit dem Randbereich des Bodens zum Eingriff kommt, wobei dann der Randbereich des Bodens mit dem Flansch der Rahmenwand eine Doppellage bildet und der Flansch des Mittelprofils mit dem Flansch der Rahmenwand ebenfalls eine Doppellage bildet und jeweils punktgeschweißt sind.

Weiterhin besonders bevorzugt ist das Verstärkungsprofil in Einbausituation außenseitig mithin auf die Kraftfahrzeugquerrichtung bezogen jeweils nach außen zeigend angeordnet und mit dem Mittelprofil gekoppelt, insbesondere verschweißt. Hierzu können beispielsweise das Verstärkungsprofil und das Mittelprofil nach deren separater Herstellung miteinander gefügt werden. Insbesondere das Verstärkungsprofil selbst im Querschnitt als Hutprofil ausgebildet, wobei dann die hutförmig abstehenden Flansche an dem Mittelprofil anliegen und hier verschweißt sind, beispielsweise durch Punktschweißen.

Auch das Verstärkungsprofil ist durch Warmumformen und Pressenhärten hergestellt und weist eine Zugfestigkeit Rm bevorzugt größer 1000 MPa auf. Hierdurch wird dann im Seitencrashverhalten eine besonders hohe Steifigkeit bereitgestellt, so dass ein, beispielsweise bei einem seitlichen Testpol ein Eindringen oder derartiges Verformen des Batterieträgers vermieden wird, so dass die darin befindlichen Batterien geschützt sind.

Ferner sind in dem Verstärkungsprofil eingesetzte Distanzhülsen angeordnet. Hierdurch wird es ermöglicht, dass in Kraftfahrzeugvertikalrichtung Schraubbolzen die Distanzhülsen und das Verstärkungsprofil durchgreifend, verwendet werden, um den Batterieträger an einer Kraftfahrzeugkarosserie zu befestigen. Insbesondere wird der Batterieträger auf die Kraftfahrzeugvertikalrichtung bezogen von unten an die Kraftfahrzeugkarosserie angeschraubt, insbesondere im Bereich des Schwellers des Kraftfahrzeuges.

Weiterhin besonders bevorzugt weist das Verstärkungsprofil nach oben gerichtete bzw. nach oben vorstehende Einprägungen bzw. Ausprägungen auf, dergestalt, dass diese als Abstandshalter ausgebildet sind. Somit kann ein entsprechend nach Einbausituation erforderlicher Abstand zu einer unteren Schwelleranbindung eingehalten werden. Dadurch, dass das Verstärkungsprofil ebenfalls als separates Bauteil hergestellt wird, können Distanzhülsen in dieses eingesetzt werden bzw. entsprechende Einprägungen bzw. Ausprägungen eingeformt werden. Wird das Verstärkungsprofil dann im Anschluss an das Mittelprofil gekoppelt und ist das Verstärkungsprofil insbesondere als Hutprofil ausgebildet, so würde durch einen thermischen Fügevorgang allenfalls das Verstärkungsprofil im Flanschbereich eine Gefügeumwandlung bzw. Schwächung erfahren. Der U-förmige Bereich des hutförmigen Verstärkungsprofils ist jedoch in seiner eingestellten Festigkeit unverändert, so dass eine hinreichende Stabilität und Sicherheit gegen ein Seitencrashverhalten gegeben ist.

Weitere Vorteile, Merkmale, Eigenschaften der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Die zuvor genannten und nachfolgend beschriebenen Merkmale können dabei im Sinne der Erfindung beliebig untereinander kombiniert werden ohne deren Rahmen zu verlassen. Es zeigen:
- Figur 1: eine perspektivische Ansicht auf einen erfindungsgemäßen Batterieträger;
- Figur 2: eine analoge Ansicht zu Figur 1, wobei jedoch hier in Kraftfahrzeuglängsrichtung die perspektivische Ansicht von hinten dargestellt ist sowie ohne Boden und ohne Querträger und Längsträger;
- Figur 3: eine perspektivische Stirnansicht auf den Bereich eines Längsprofils;
- Figur 4: eine Abwandlung von Figur 3;
- Figur 5: eine Querschnittsansicht durch ein Längsprofil gemäß Schnittlinie V-V aus Figur 1;
- Figur 6: einen Querschnitt durch die hintere Querwand gemäß Schnittlinie VI-VI aus Figur 1;
- Figur 7: eine perspektivische Ansicht mit wellenförmigem Verlauf in der Kopplung von Mittelprofil, Rahmenwand und Boden;
- Figur 8: eine perspektivische Ansicht von unten;
- Figur 9: eine perspektivische Stirnansicht jeweils mit Blickrichtung von unten auf den Batterieträger sowie in Einzeldarstellung Rahmenwand und Mittelprofil und
- Figur 10: eine Explosionsdarstellung des gebauten Batterieträgers mit doppellagigem Boden und Kühlkanalstruktur.

In den Figuren werden für gleiche oder ähnliche Bauteile dieselben Bezugszeichen verwendet, auch wenn eine wiederholte Beschreibung oder Darstellung aus Vereinfachungsgründen entfällt.

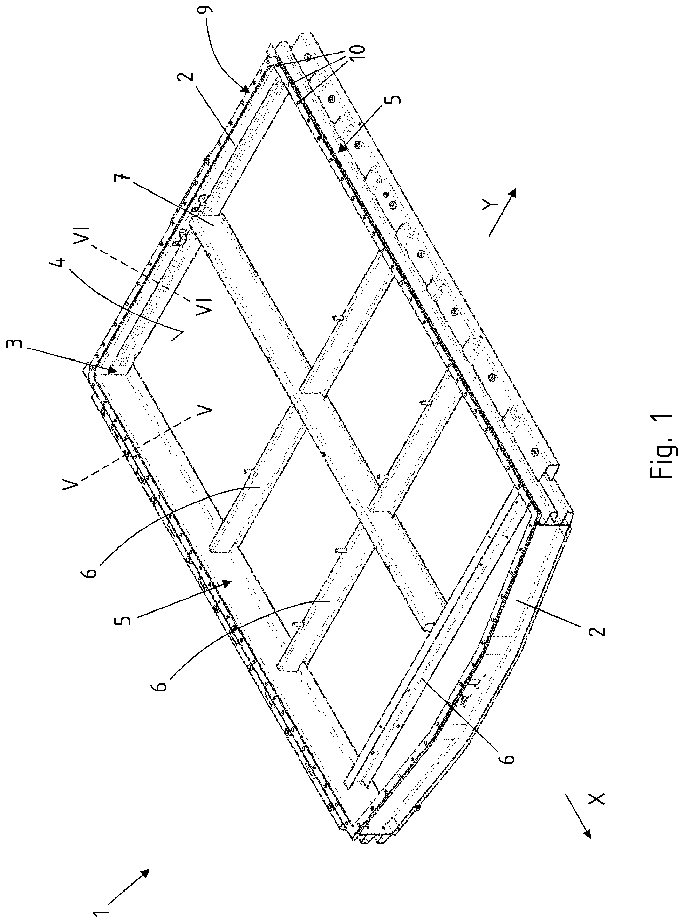

Figur 1 zeigt eine perspektivische Ansicht auf einen erfindungsgemäßen Batterieträger 1. Dieser weist in Kraftfahrzeuglängsrichtung X vorne und hinten jeweils eine Querwand 2 auf. Diese Querwand 2 erstreckt sich in Kraftfahrzeugquerrichtung Y jeweils über die gesamte Breite des Kraftfahrzeugträgers. Ferner ist ein wannenförmiges Gehäuse 3 gezeigt, wobei ein Boden 4 nur angedeutet ist. Die umlaufende Wandung des wannenförmigen Gehäuses 3 wird durch die zwei Querwände 2 ausgebildet sowie in Kraftfahrzeuglängsrichtung X sich erstreckende Längsprofile 5. Die Längsprofile 5 selbst sind in den nachfolgenden Figuren näher beschrieben. Innerhalb des wannenförmigen Gehäuses 3 können weitere Querträger 6 angeordnet sein sowie hier dargestellt mindestens ein Längsträger 7. Die Querträger 6 und Längsträger 7 dienen zum einen als Versteifung, insbesondere in Kraftfahrzeuglängsrichtung X und Kraftfahrzeugquerrichtung Y. Auch können diese einzelnen Aufnahmeräume für verschiedene Batterien, welche jedoch nicht näher dargestellt sind, angeordnet sein. Ferner sind die Querträger 6 durchgreifende Distanzhülsen 8 angeordnet. Diese Distanzhülsen 8 dienen als Abstandshalter zur Befestigung eines nicht näher dargestellten Deckels. Am oberen Rand kann ein umlaufender Flansch 9 angeordnet sein, welcher über eine Vielzahl von Montageöffnungen 10 verfügt, um hier einen nicht näher dargestellten Deckel auf dem Batteriekasten zu montieren.

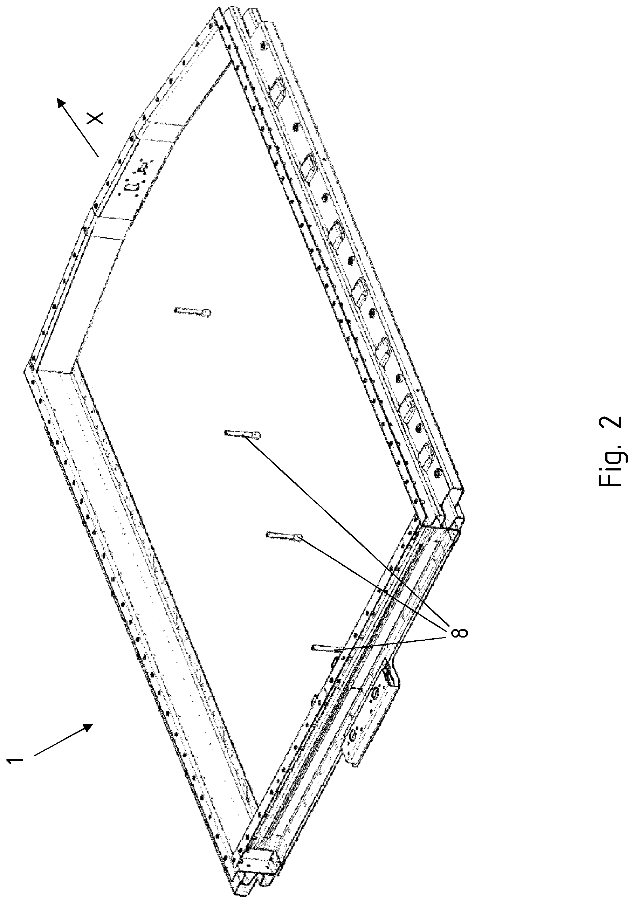

Figur 2 zeigt eine analoge Ansicht zu Figur 1, wobei jedoch hier in Kraftfahrzeuglängsrichtung X die perspektivische Ansicht von hinten dargestellt ist sowie ohne Boden 4 und ohne Querträger 6 und Längsträger 7. Auch hier sind im Bereich des Längsträgers 7 entsprechende Distanzhülsen 8 angeordnet, die den Längsträger 7 durchgreifen und ebenfalls als Abstandhalter zum Verschluss mit einem nicht näher dargestellten Deckel ausgebildet sind.

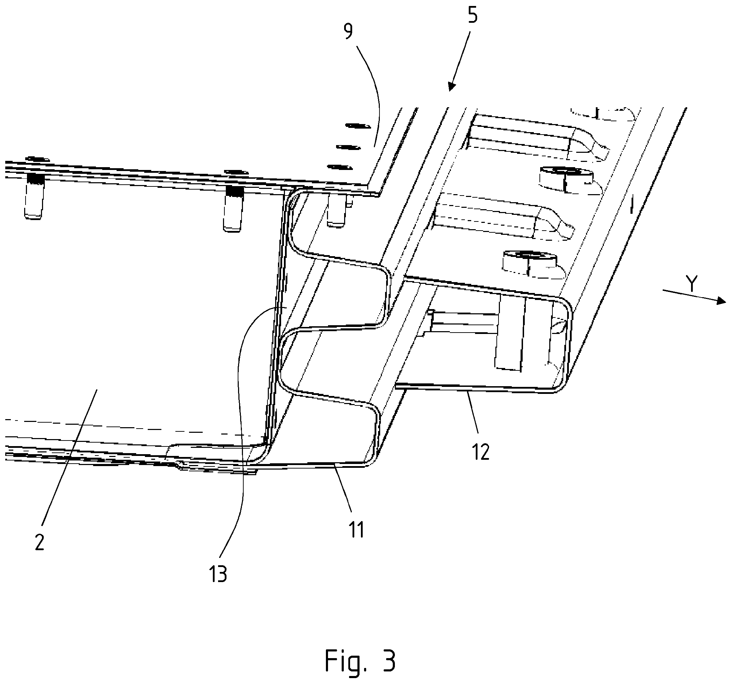

Figur 3 zeigt eine perspektivische Stirnansicht auf den Bereich eines Längsprofils 5. Das Längsprofil 5 selbst ist aus drei einzelnen Profilen hergestellt. Dies ist ein doppelhutförmiges Mittelprofil 11, ein auf die Kraftfahrzeugquerrichtung Y außenseitig angeordnetes Verstärkungsprofil 12. Das Verstärkungsprofil 12 ist im Querschnitt bevorzugt U-förmig, insbesondere auch selbst hutförmig. Ferner ist im Innenwandbereich eine Rahmenwand 13 ausgebildet. Die Rahmenwand 13 ist auch ein Profil, welches im Wesentlichen L-förmig ausgebildet ist. Die drei Profile, mithin das Mittelprofil 11, das Verstärkungsprofil 12 und die Rahmenwand 13 sind als warmumgeformte und pressgehärtete Bauteile aus einer härtbaren Stahllegierung hergestellt. Beispielsweise handelt es sich bei der Stahllegierung um einen Mangan-Bor-Stahl, insbesondere beispielsweise um 22MnB5. Die Teile sind untereinander verschweißt. Die ebenfalls dargestellte Querwand 2 kann insbesondere mit der Rahmenwand 13 fluiddicht gekoppelt sein, so dass sich ein wannenförmiges Gehäuse 3 insbesondere fluiddicht ergibt. Hier kann ein Schweißverfahren zur Kopplung der einzelnen Bauteile verwendet werden, insbesondere wird zweckmäßigerweise Punktschweißen, Laserschweißen bzw. ein Mig/Mag-Schweißverfahren angewendet.

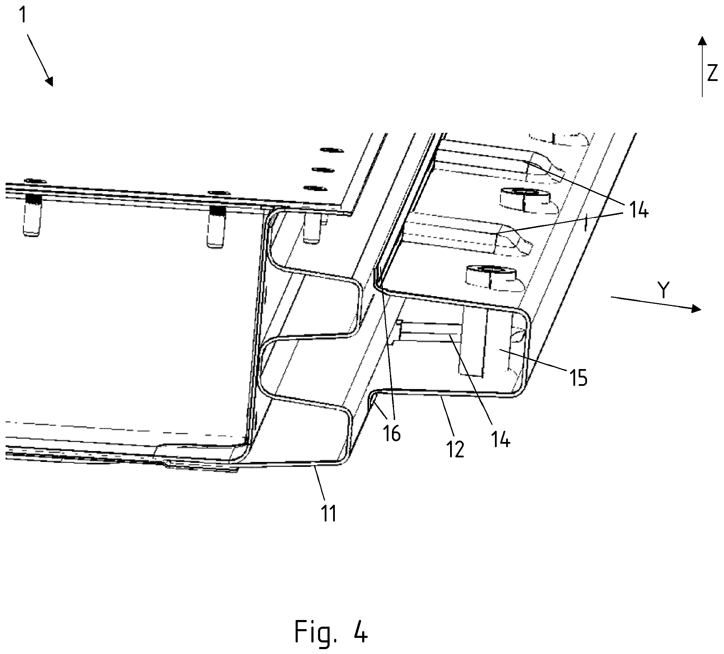

Figur 4 zeigt eine Abwandlung, wonach das Verstärkungsprofil 12 in seinem Querschnitt selbst hutförmig ausgebildet ist. Das Verstärkungsprofil 12 weist Ausformungen auf, die auf die Kraftfahrzeugvertikalrichtung Z nach oben ausgebildet sind. Diese können als Abstandhalter dienen. Ferner sind das Verstärkungsprofil 12 durchgreifend Distanzhülsen 15 angeordnet. Diese können von nicht näher dargestellten Schraubbolzen durchgriffen werden, so dass der Batterieträger 1 damit von unten an ein Kraftfahrzeug angeschraubt werden kann. An der Unterseite des Verstärkungsprofils 13 können ebenfalls Ausformungen 14 ausgebildet sein. Die Ausformungen 14 dienen auch gleichzeitig als Versteifungssicken in Kraftfahrzeugquerrichtung Y. Die jeweiligen Flansche 16 des hutförmigen Verstärkungsprofils 13 liegen dabei an dem Mittelprofil 11 außenseitig an. Zunächst können das Verstärkungsprofil 13 und das Mittelprofil 11 getrennt voneinander hergestellt werden. Dann könnten dem Verstärkungsprofil 12 Distanzhülsen 15 eingesetzt werden und mit dem Verstärkungsprofil 12 verschweißt werden. Im Anschluss kann das Verstärkungsprofil 12 dann mit seinen Flanschen 16 an das Mittelprofil 11 außenseitig angesetzt werden und wiederum hier verschweißt werden, beispielweise mit einem Punktschweißverfahren.

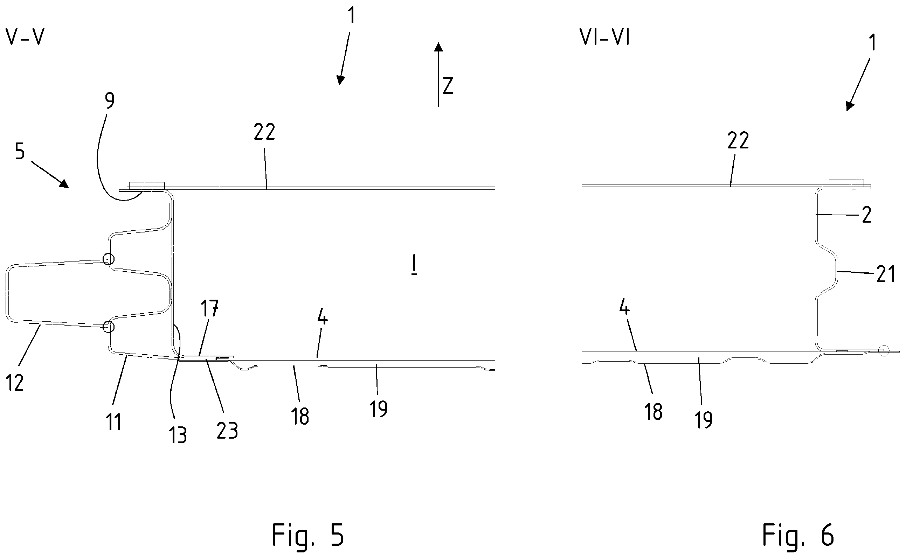

Figur 5 zeigt eine Querschnittsansicht durch einen Batterieträger 1 gemäß Schnittlinie V-V aus Figur 1, konkret durch ein Längsprofil 5. Hier dargestellt ist das Verstärkungsprofil 12, gekoppelt an das doppelhutförmige Mittelprofil 11. Das Mittelprofil 11 ist wiederum gekoppelt mit der Rahmenwand 13. Ferner ist die Rahmenwand 13 selbst im Querschnitt S-förmig ausgebildet und weist den oben umlaufenden Flansch 9 zur Kopplung mit einem Deckel 22 auf. Das Rahmenprofil weist ferner einen untenliegenden Koppelflansch auf. Hier liegt ein weiterer Aspekt der Erfindung. Der Flansch 17 des Profils der Rahmenwand 13 bildet eine Doppellage mit der Mittelwand bzw. dem Mittelprofil 11 auf bzw. einen Flansch 23 der Mittelwand. Ferner ist der Boden 4 mit dem Flansch 17 der Rahmenwand 13 gekoppelt. Auch der Boden 4 und der Flansch 17 der Rahmenwand 13 bilden eine Doppellage auf.

Figur 6 zeigt eine Querschnittsansicht gemäß der Schnittlinie VI-VI aus Figur 1. Hier ist eine Rückwand dargestellt. Die Rückwand weist eine querverlaufende Sicke 21 auf. Hierdurch wird die Steifigkeit in Kraftfahrzeugquerrichtung Y, insbesondere der rückseitigen Querwand 2 verbessert. Die Sicke 21 verläuft über die gesamte Breite des Batterieträgers 1.

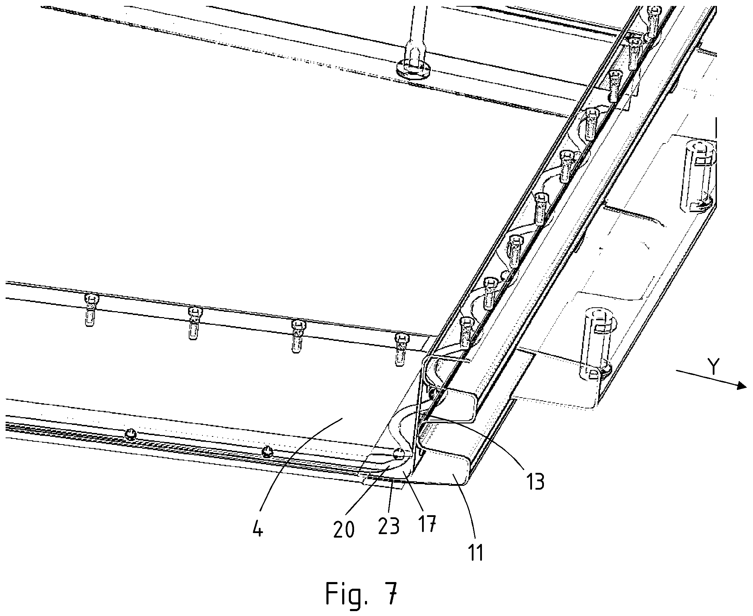

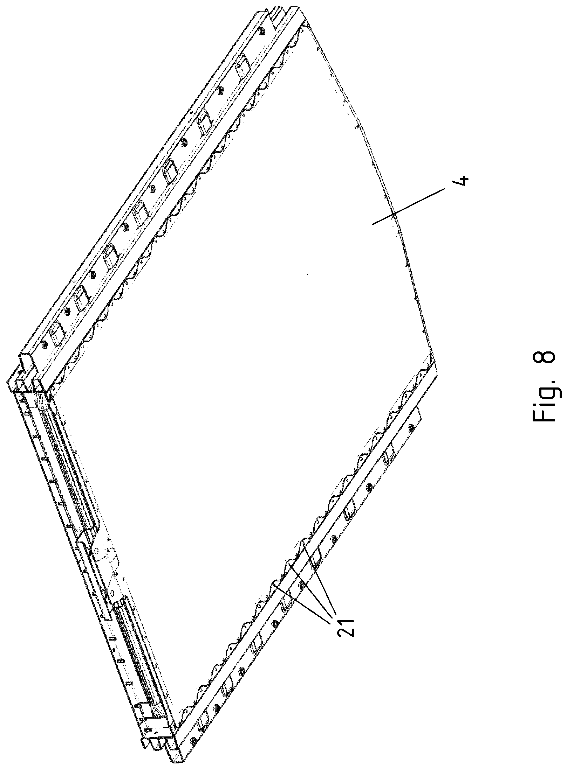

Näher dargestellt in Figur 7 sowie auch der Unteransicht von Figur 8 bis 10 ist hier ein wellenförmiger Verlauf gebildet. Es kann eine hinreichende Auflagenfläche geschaffen werden, so dass in den jeweiligen Wellentälern Punktschweißungen durchgeführt werden können, wodurch effektiv vermieden wird, dass eine Dreifachlage ausgebildet wird. Ferner ist unterhalb des Bodens 4 ein Unterfahrschutzblech 18 angeordnet. Das Unterfahrschutzblech 18 kann selbst warmumgeformt und pressgehärtet sein. Zwischen dem Boden 4 und dem Unterfahrschutzblech 18 können Kühlkanäle 19 ausgebildet sein. Insbesondere ist der Boden 4 selbst eben bzw. plan, so dass eine ebene Aufstandsfläche für nicht näher dargestellte im Innenraum angeordnete Batterien ausgebildet ist. Entsprechende Verprägungen können am Unterfahrschutzblech 18 ausgebildet sein bzw. gegenüber dem Bodenblech auf die Kraftfahrzeugvertikalrichtung Z nach untenstehend ausgebildet sein, so dass sich eben eine im Wesentlichen ebene Aufstandsfläche ergibt. Auch kann der Boden 4 doppellagig ausgebildet sein und ein zusätzliches Unterfahrschutzblech 18 unterhalb des Bezugszeichens 18 nochmals angeordnet sein.

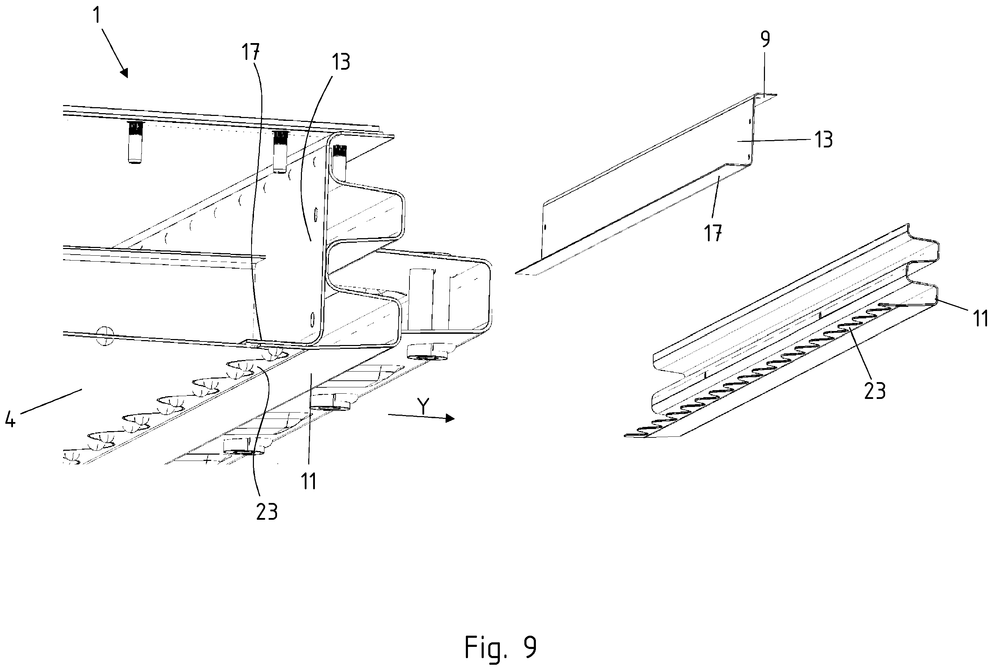

Figur 7 zeigt eine perspektivische Ansicht durch den wellenförmigen Verlauf. Der untere Flansch 17 der Rahmenwand 13 ist somit wellenförmig ausgebildet. Ferner ist ein Randbereich in Kraftfahrzeugquerrichtung Y des Bodenbleches 4 dazu korrespondierend wellenförmig ausgebildet. Der wellenförmige Verlauf 20 kann wie hier dargestellt durch einen beispielsweise sinusförmig orientierten Verlauf ausgebildet sein. Der wellenförmige Verlauf 20 kann jedoch auch anderweitig, beispielsweise rechteckig oder dreieckförmig oder in Mischformen ausgebildet sein. Jeweilige Wellenberge des Flansches 17 greifen somit in Wellentäler des Bodenbleches 4 ein. Jeweilige Wellenberge des Bodenbleches 4 greifen wiederum in Wellentäler des Flansches 17 ein. Zusammen mit dem unteren Flanschbereich des Mittelprofils 11 wird somit jeweils nur eine Doppellage ausgebildet. Es können dann in den jeweiligen Wellenbergen Punktschweißungen vorgenommen werden, wie beispielsweise in Figur 9 dargestellt. Hier sind die Punktschweißungen der Wellenberge des Flansches 17 der Rahmenwand 13 gezeigt.

Figur 9 zeigt eine alternative Ausgestaltungsvariante. Hierbei ist ebenfalls der Boden 4 wellenförmig in seinem Randbereich, bezogen auf die Kraftfahrzeugquerrichtung Y ausgebildet. Dazu korrespondierend ist das doppelhutförmige Profil mit einem unteren Flanschbereich 23 wellenförmig verlaufend. Der untere Flansch 17 der Rahmenwand 13 ist gradlinig verlaufend. Jeweils sind dann Punktschweißungen ausgebildet, so dass der Flansch 17 der Rahmenwand 13 und das doppelhutförmige Profil 11 oder der Boden jeweils eine Doppellage ausbilden, jedoch keine Dreifachlage ausgebildet wird.

In der seitlichen Detailansicht ist nochmals gezeigt, dass die Rahmenwand 13 einen unten durchlaufenden Flansch 17 aufweist. Das doppelhutförmige Mittelprofil 11 weist in einem unteren Flanschbereich 23 mit dem zuvor beschriebenen wellenförmigen Verlauf auf.

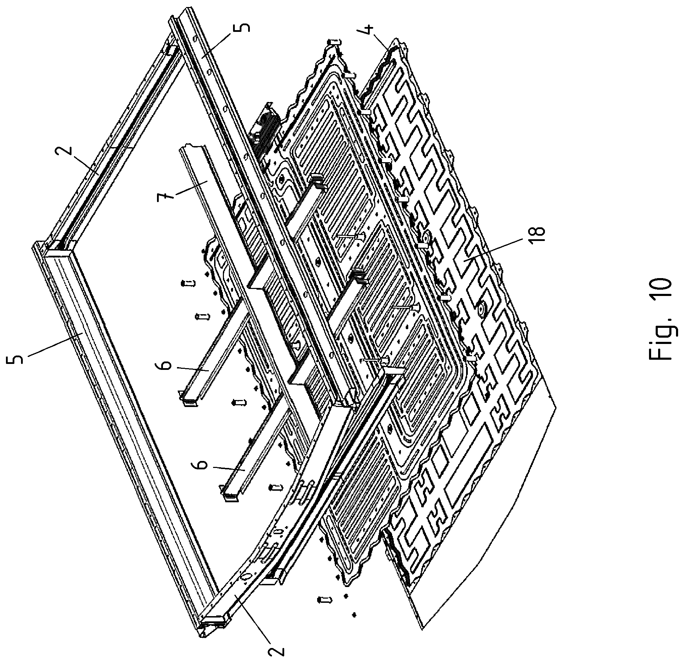

Figur 10 zeigt eine perspektivische Explosivdarstellung. Der umlaufende Rahmen ist durch die zwei Längsprofile sowie die zwei Querwände ausgebildet. Darin angeordnet sind Querträger 6 sowie Längsträger 7. Ferner dargestellt ist der Boden 4 mit einer Kühlkanalstruktur. Der außen umlaufende Rand um den Boden weist eine wellenförmige Struktur auf. Diese wird dann gemäß Figur 9 komplementär zu dem Mittelprofil 11 von unten an den Flansch 17 der Rahmenwand 13 gekoppelt. Unterhalb des Kühlsystems wird ein weiterer Unterfahrschutz 18 angeordnet. Der Unterfahrschutz 18 weist weitere Einprägungen als Versteifung auf und kann auch als warmumform-pressgehärtetes Bauteil ausgebildet sein. Bevorzugt ist in einer Ausgestaltungsvariante der Boden 4 aus einer Aluminium- bzw. Leichtmetalllegierung hergestellt. Die Kopplung mit dem Flansch 17 der Rahmenwand 13 erfolgt über Schweißen. Hierzu werden formschlüssig eingenietete Stahlnieten in den wellenförmigen Randbereich des Bodens 4 eingenietet. Diese Stahlnieten werden dann mit dem Flansch 17 mittels Schweißen, insbesondere Punktschweißen, thermisch gefügt.

Der Boden 4 umfasst ein Kühlsystem und ist aus mindestens zwei Aluminiumblechen ausgebildet, von denen in der Figur 10 die kühlkanalenthaltene Blechlage exemplarisch dargestellt ist. Für die Verbindung mit den pressgehärteten Längsprofilen 5 sowie den Querwänden 2 kommen Stahlstanznieten zur Anwendung, um ein anlagentechnisch konventionelles Punktschweißen zu ermöglichen.

### Bezugszeichen:

- 1 -: Batterieträger
- 2 -: Querwand
- 3 -: wannenförmiges Gehäuse
- 4 -: Boden
- 5 -: Längsprofil
- 6 -: Querträger
- 7 -: Längsträger
- 8 -: Distanzhülse
- 9 -: Flansch
- 10 -: Montageöffnung
- 11 -: doppelhutförmiges Mittelprofil
- 12 -: Verstärkungsprofil
- 13 -: Rahmenwand
- 14 -: Ausformung
- 15 -: Distanzhülse
- 16 -: Flansch zu 12
- 17 -: Flansch zu 13
- 18 -: Unterfahrschutz
- 19 -: Kühlkanal
- 20 -: wellenförmiger Verlauf
- 21 -: Sicke
- 22 -: Deckel
- 23 -: Flansch zu 11

- I -: Innenraum
- X -: Kraftfahrzeuglängsrichtung
- Y -: Kraftfahrzeugquerrichtung
- Z -: Kraftfahrzeugvertikalrichtung

## Patentansprüche

1. Batterieträger (1) für eine Elektrofahrzeug, aufweisend einen wannenförmigen Behälter, der mit einem Deckel verschließbar ist, wobei der wannenförmige Behälter (3) einen außen umlaufenden Rand aufweist, welcher in Einbaulage an einer Vorderseite und einer Rückseite eine Querwand (2) aufweist und seitlich jeweils ein Längsprofil (5) aufweist, wobei das jeweilige Längsprofil (5) im Querschnitt von einem doppelhutförmigen Mittelprofil (11), einer innenliegenden Rahmenwand (13) und einem außenliegenden U-förmigen Verstärkungsprofil (12) ausgebildet ist, wobei mindestens zwei der drei Profile (11, 12, 13) durch Warmumformen und Presshärten hergestellt sind und miteinander thermisch gefügt sind und dass der Behälter einen Boden (4) aufweist, welcher fluiddicht mit den Querwänden (2) und den Längsprofilen (5) gekoppelt ist.

2. Batterieträger (1) nach Anspruch 1, **dadurch gekennzeichnet, dass** der Boden (4) als Kühlboden ausgebildet ist.

3. Batterieträger (1) nach Anspruch 2, **dadurch gekennzeichnet, dass** der Boden (4) doppellagig ausgebildet ist, wobei zwischen den Lagen Kühlkanäle ausgebildet sind.

4. Batterieträger (1) nach einem der vorgenannten Ansprüche, **dadurch gekennzeichnet, dass** das Mittelprofil (11) und die innenliegende Rahmenwand (13) jeweils einen unten angeordneten Flansch (17) aufweisen und über diesen Flansch (17) eine Doppellage bildend miteinander gekoppelt sind.

5. Batterieträger nach einem der vorgenannten Ansprüche, **dadurch gekennzeichnet, dass** der Flansch (9) mit dem Boden (4) gekoppelt ist.

6. Batterieträger (1) nach einem der vorgenannten Ansprüche, **dadurch gekennzeichnet, dass** der Flansch (17) der Rahmenwand (13) einen wellenförmigen Verlauf (20) aufweist und dass der Boden (4) dazu korrespondierend einen wellenförmigen Randbereich aufweist, dergestalt, dass die Wellenform des Bodens (4) korrespondierend zu der Wellenform des Flansches (17) der Rahmenwand (13) ineinandergreifen, dergestalt , dass der Boden (4) in seinen Wellentälern und der Flansch (17) der Rahmenwand (13) in seinen Wellentälern jeweils mit dem Boden (4) eine Doppellage ausbilden und mit dem Boden (4) gefügt sind.

7. Batterieträger (1) nach einem der vorgenannten Ansprüche, **dadurch gekennzeichnet, dass** Verstärkungsprofil (12) außenseitig mit dem Mittelprofil (11) gekoppelt ist.

8. Batterieträger (1) nach einem der vorgenannten Ansprüche, **dadurch gekennzeichnet, dass** das Verstärkungsprofil (12) als Hutprofil ausgebildet ist und mit seinen hutförmigen Flanschen an dem Mittelprofil (11) anliegt.

9. Batterieträger (1) nach einem der vorgenannten Ansprüche, **dadurch gekennzeichnet, dass** das Verstärkungsprofil (12) eingesetzte Distanzhülsen (8, 15) aufweist, die sich in Kraftfahrzeugvertikalrichtung (Z) erstrecken, dergestalt, dass die Distanzhülsen (8) durchgreifend Bolzen verwendet werden, um den Batterieträger (1) an einer Kraftfahrzeugkarosserie zu befestigen.

10. Batterieträger (1) nach einem der vorgenannten Ansprüche, **dadurch gekennzeichnet, dass** unterhalb des Bodens (4) ein Unterfahrschutz angeordnet ist, welcher durch Warmumformen und Presshärten hergestellt ist.

11. Batterieträger (1) nach einem der vorgenannten Ansprüche, **dadurch gekennzeichnet, dass** das Mittelprofil (11), die Rahmenwand (13), das Verstärkungsprofil (12) und/oder der Unterfahrschutz (18) aus einer härtbaren Stahllegierung, insbesondere einem Mangan-Bor-Stahl, hergestellt sind.

12. Batterieträger (1) nach einem der vorgenannten Ansprüche, **dadurch gekennzeichnet, dass** der Batterieträger (1) einen innen angeordneten Querträger (6) aufweist, der sich zwischen den äußeren Längsprofilen (5) erstreckt und insbesondere mit der Rahmenwand (13) gekoppelt ist und/oder dass in dem Batterieträger (1) ein innenliegender Längsträger (7) angeordnet ist, der insbesondere mit den Querwänden (2) gekoppelt ist.

13. Batterieträger (1) nach einem der vorgenannten Ansprüche, **dadurch gekennzeichnet, dass** der Boden (4) aus einer Leichtmetalllegierung hergestellt sind, in welche Stahlnieten eingestanzt ist, wobei die Stahlnieten stoffschlüssig mit den Stahlbauteilen gekoppelt sind, insbesondere mit der Querwand (2) und/oder den Längsprofilen (5).
